Europäisches Patentamt

European Patent Office

Office européen des brevets

(19)

(11) Veröffentlichungsnummer: **0 363 700**
**A2**

(12) **EUROPÄISCHE PATENTANMELDUNG**

(21) Anmeldenummer: 89117442.7

(22) Anmeldetag: 21.09.89

(51) Int. Cl.5: **G09F 9/35 , G02F 1/133**

(30) Priorität: 11.10.88 DE 3834492

(43) Veröffentlichungstag der Anmeldung:
**18.04.90 Patentblatt 90/16**

(84) Benannte Vertragsstaaten:
**AT BE CH DE FR GB LI LU NL**

(71) Anmelder: **LIC-LANGMATZ GMBH**
**Am Gschwend 10**
**Garmisch-Partenkirchen(DE)**

(72) Erfinder: **Langmatz, Hans**
**Riesserseestrasse 51**
**D-8100 Garmisch-Partenkirchen(DE)**

(74) Vertreter: **Huss, Carl-Hans, Dipl.-Ing.**
**Patentanwalt Griesstrasse 3 a Postfach 14 54**
**D-8100 Garmisch-Partenkirchen(DE)**

(54) **Leuchtanzeigeeinrichtung.**

(57) Bei Leuchtanzeigeeinrichtungen, bei denen eine aus einer Milchglasscheibe ausgesparte Anzeige von einer dahinter angeordneten Glühbirne beleuchtet wird oder bei denen als Anzeige eine Leuchtdiodenanordnung verwendet wird, wird der Kontrast zwischen der Leuchtanzeige und der umgebenden Fläche bei einfallendem Sonnenlicht so weit verringert, daß die Anzeige kaum sichtbar ist. Damit bei einer Anforderungsampel die nach deren Betätigung aufleuchtende Anzeige "Signal kommt" auch bei einfallendem Sonnenlicht einwandfrei erkennbar ist, enthält die Leuchtanzeigeeinrichtung eine transflektive Flüssigkristall-Anzeigeeinheit, an deren von dem Sichtfenster der Leuchtanzeigeeinrichtung abgewandten Rückseite als Lichtquelle eine Leuchtdiodenanordnung vorgesehen ist, die in einen Reflektor eingebettet ist. Die Flüssigkristall-Anzeige erscheint dabei als Schatten in einem beleuchteten Lichtfeld, wobei der Kontrast durch einfallendes Sonnenlicht noch verstärkt wird.

FIG. 2

EP 0 363 700 A2

## Leuchtanzeigeeinrichtung

Die Erfindung betrifft eine Leuchtanzeigeeinrichtung an einer Anforderungsampel mit einem Sichtfenster, durch das eine Anzeige sichtbar ist, wenn diese von einer Lichtquelle beleuchtet ist.

Eine Anforderungsampel ist eine meist "Verkehrsampel" genannte Wechsellichtanlage im Sinne der Straßenverkehrsordnung, die ein konstantes Verkehrssignal abgibt, das nur durch Betätigung seitens eines Verkehrsteilnehmers änderbar ist. Solche Anforderungsampeln befinden sich häufig an Fußgängerüberwegen und signalisieren dem rollenden Straßenverkehr solange freie Fahrt, bis ein Fußgänger einen Betätigungsknopf der Anforderungsampel drückt oder einen Kontaktbereich derselben berührt, woraufhin nach einer gewissen Verzögerungszeit die Verkehrsampel den Fußgängerüberweg freigibt. Da eine gewisse Zeitspanne bis zu dem angestrebten Signalwechsel vergeht und erkennbar sein soll, daß die Anforderungsampel betätigt wurde, leuchtet an dieser eine Anzeige auf, die in aller Regel "Signal kommt" lautet.

Diese Leuchtanzeige soll bei allen auftretenden Lichtverhältnissen gut sichtbar sein, damit erkennbar ist, daß die Anforderungsampel funktionsbereit ist und die Änderung des angezeigten Verkehrssignals in die Wege geleitet ist. Hierdurch wird zum einen verhindert, daß die Anforderungsampel nach Einleiten des Signalwechsels überflüssigerweise wiederholt betätigt wird, und es wird den wartenden Verkehrsteilnehmern angezeigt, daß dieser Signalwechsel erfolgen wird, so daß diese bereitwilliger hierauf warten werden.

Die bisher anzutreffenden Anforderungsampeln haben in aller Regel eine Leuchtanzeigeeinrichtung mit einer Milchglasscheibe, auf der die Angabe "Signal kommt" ausgespart ist und hinter der sich eine Glühbirne als Lichtquelle befindet. Diese Ausbildung hat den Nachteil, daß bei intensiver Sonneneinstrahlung kaum erkennbar ist, ob die Anzeige aufleuchtet oder ob dies nicht der Fall ist, da das Sonnenlicht den Kontrast zwischen der beleuchteten Aussparung "Signal kommt" der Milchglasscheibe und deren übrigen Fläche weitestgehend ausschaltet. Wenn zudem in der Leuchtanzeigeeinrichtung ein Reflektor zur Bündelung des Lichts der Lichtquelle vorgesehen ist, wie dies in aller Regel der Fall ist, wird bei flach einfallendem Sonnenlicht die lichtenergiearme Anzeige herkömmlicher Art meist völlig unkenntlich, da das von dem Reflektor zurückgeworfene Sonnenlicht zusätzlich die Kontraste auf der Milchglasscheibe verringert. Es kann aber auch vorkommen, daß bei nicht gedrücktem Betätigungsknopf (oder nicht berührtem Sensor) das einfallende und durch den Reflektor zurückgeworfene Sonnenlicht "Signal kommt" erscheinen läßt.

Es gibt auch bereits Anforderungsampeln, die anstelle einer beleuchteten Milchglasscheibe eine Leuchtdioden-Anzeige (LED-Anzeige) verwenden, wobei diese Ausbildung den Vorteil hat, daß die Leuchtdioden bei geringerem Stromverbrauch und geringerem Wartungsaufwand eine erheblich längere Nutzungsdauer als Glühbirnen haben. Hinsichtlich der Erkennbarkeit der Leuchtanzeige bei einfallendem Sonnenlicht werden hierbei jedoch keine Verbesserungen erreicht, da auch eine LED-Anzeige bei Sonnenlicht kontrastlos wird.

Der vorliegenden Erfindung liegt die Aufgabe zugrunde, eine Leuchtanzeigeeinrichtung der betrachteten Art so weiter zu entwickeln, daß ihre Leuchtanzeige bei allen auftretenden Lichtverhältnissen und dabei sowohl im vollen Sonnenlicht als auch bei Dunkelheit deutlich erkennbar ist.

Diese Aufgabe wird erfindungsgemäß durch die im Kennzeichen des Patentanspruchs 1 ange-gebenen Merkmale gelöst. Vorteilhafte Weiterbil-dungen der Erfindung sind in den Unteransprüchen gekennzeichnet.

Die erfindungsgemäße Leuchtanzeigeeinrichtung verwendet für die Anzeige eine transflektive FlüssigkristallAnzeigeeinheit, nachfolgend LCD-Einheit genannt, an deren von dem Sichtfenster abgewandten Rückseite als Lichtquelle eine Leuchtdio-denanordnung, nachfolgend LED-Anordnung ge-nannt, vorgesehen ist, die in einen Reflektor eingebettet ist. Die LCD-Einheit, die vorzugsweise etwa 60 % des von der LED-Anordnung kommenden Lichts passieren läßt, produziert damit im Gegensatz zu den bekannten LED-Anzeigen kein Licht, sondern Schatten, der durch einfallendes Sonnenlicht noch verstärkt wird, da dieses, von dem Re-flektor zurückgeworfen, die die LCD-Anzeige umgebende Lichtfläche zusätzlich erhellt, wodurch der Kontrast der Schatten-Anzeige verstärkt wird. Die in einen Reflektor eingebettete LED-Anordnung, die zweckmäßigerweise aus einer Reihe von Leuchtdioden besteht, deren Mittelpunkte auf der mittigen Längsachse des Reflektors liegen sollten, gewährleistet sowohl bei Tageslicht als auch in nächtlicher Dunkelheit die einwandfreie Sichtbarkeit der LCD-Anzeige.

Der Reflektor, der an der Leuchtelektrodenplatine befestigt ist, hat zweckmäßigerweise die Form eines langgestreckten offenen Kastens mit geneigt verlaufenden, lichtreflektierenden Innenwänden, wobei die Anordnung so getroffen ist, daß die LCD-Einheit in einer weitestgehend gleichmäßig beleuchteten Lichtfläche erscheint. Hierzu sollten die Kopfenden der Leuchtelektroden eine Einbuchtung zum allseitigen flächigen Zerstreuen des ausgesandten Lichtes aufweisen, das durch die Reflexionsflächen des Reflektors auf die die LCD-Anzeige umgebende Lichtfläche gerichtet wird.

Die LCD-Einheit sollte nach einem weiteren Vorschlag der Erfindung mit einem sinusförmigen Wechselstrom angesteuert werden, der praktisch keinen Gleichspannungsanteil enthält.

Die erfindungsgemäße Leuchtanzeigeeinrichtung ist selbstverständlich nicht nur an Anforderungsampeln, sondern auch anderweitig verwendbar, wobei sie ihre besonderen Vorteil besonders in den Fällen zur Geltung bringen kann, in denen die Leuchtanzeigeeinrichtung auch dem Sonnenlicht ausgesetzt sein kann.

Weitere Einzelheiten der Erfindung ergeben sich aus der nachfolgenden Beschreibung einer bevorzugten Ausführungsform sowie anhand der Zeichnung. Dabei zeigen:

Fig. 1 eine Ansicht eines Betätigungsorgans einer Anforderungsampel mit einer Leuchtanzeigeeinrichtung;

Fig. 2 die Leuchtanzeigeeinrichtung gemäß Fig. 1 in einer teilweise weggebrochenen Explosionsdarstellung und

Fig. 3a bis 3c den in der Leuchtanzeigeeinrichtung verwendeten Reflektor in einer Ansicht und zwei zueinander senkrechten Vertikalschnitten.

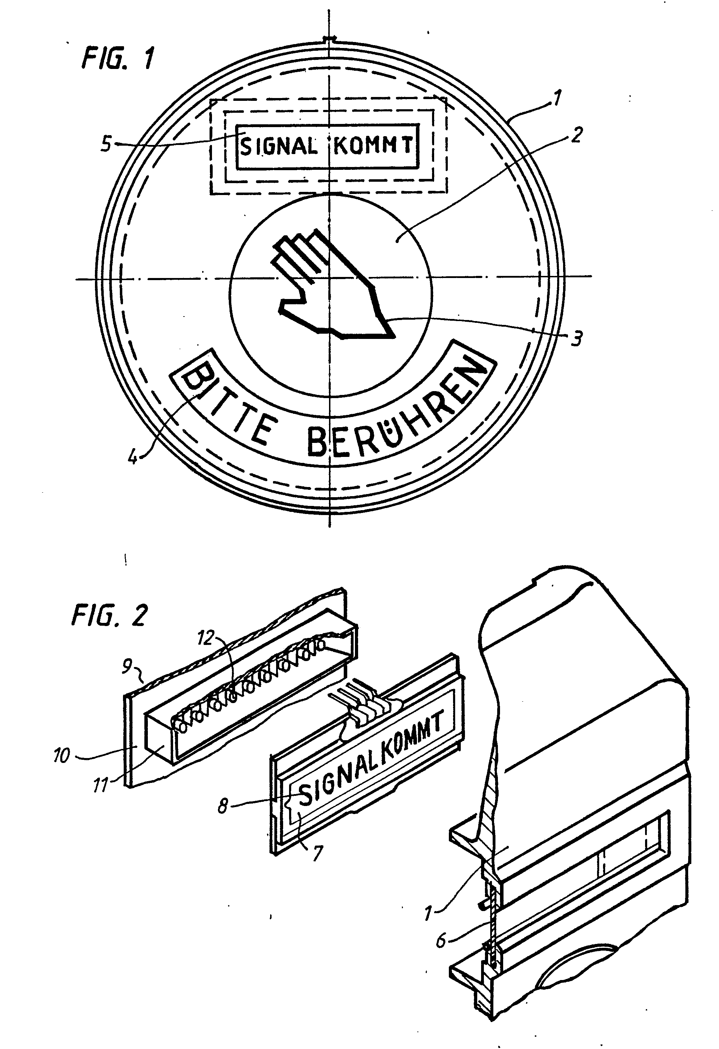

In Figur 1 ist ein Betätigungsorgan einer Anforderungsampel in Form eines Fußgängerdrucktastengehäuses 1 dargestellt, das z.B. ähnlich eines Kleinsignalgebers (Fahrradsignalgebers) ausgebildet sein kann. Es enthält mittig ein Berührungsfeld 2, auf das ein entsprechendes Symbol 3 und ein entsprechender Schriftzug 4 hinweisen. Wenn das Berührungsfeld 2 betätigt wird, leuchtet in einer Leuchtanzeigeeinrichtung 5 die Angabe "Signal kommt" auf, die den Hinweis darauf gibt, daß das angestrebte Umschalten des Ampelsignals eingeleitet ist. Anstelle eines Berührungsfeldes mit Sensortechnik kann natürlich auch eine mechanische Betätigung mit Druckknopf vorgesehen sein.

Die Leuchtanzeigeeinrichtung 5 ist mit ihren wesentlichen Bestandteilen in Figur 2 dargestellt. In das Drucktastengehäuse 1 ist ein Sicht- und Schutzfenster 6 eingelassen, hinter dem sich eine transflektive FlüssigkristallAnzeigeinheit 7 befindet, deren Anzeige "Signal kommt" als Schatten auf einer Lichtfläche 8 erscheint, wenn die dahinter angeordnete Leuchtdiodenanordnung 9 Licht abgibt. Die Leuchtdiodenanordnung 9 umfaßt eine Platine 10, auf der ein Reflektor 11 befestigt ist, in den eine Reihe voneinander beabstandeter Leuchtdioden 12 eingebettet sind.

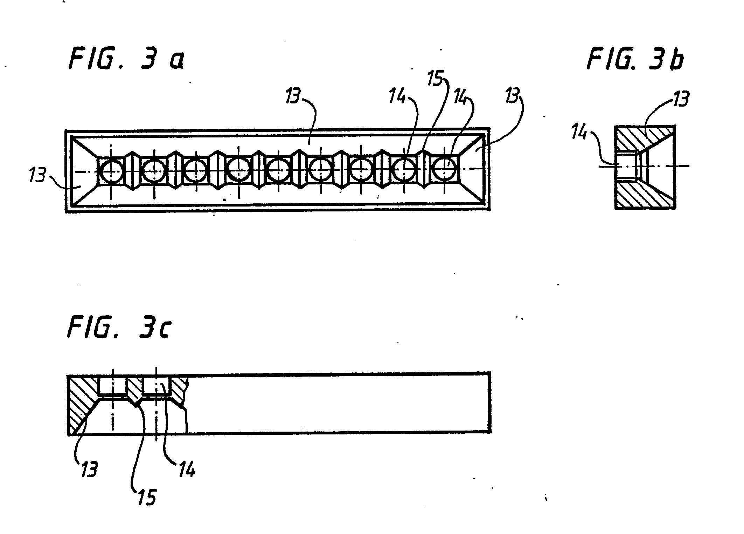

Der in den Figuren 3a bis 3c dargestellte Reflektor hat eine langgestreckte Kastenform mit geneigt verlaufenden Reflexionsflächen 13, die das von den Leuchtdioden emittierte Licht derart sammeln, daß die die Anzeige "Signal kommt" umgebende Lichtfläche 8 weitestgehend gleichmäßig beleuchtet wird. Zwischen den Aufnahmeöffnungen 14 für die Leuchtelektroden 12 befinden sich dachförmige Reflexionsstege 15.

Die Betätigung des Berührungsfeldes 2 (oder eines Druckknopfes) hat zur Folge, daß die Leuchtdioden 12 die Lichtfläche 8 mit der transflektiven Flüssigkristall-Anzeige beleuchten, wobei letztere sich als Schatten deutlich von der Lichtfläche abhebt. Wenn durch das Sicht- und Schutzfenster 6 Sonnenlicht einfällt, wird dieses vom Reflektor 11 reflektiert, wodurch der Kontrast der von der Flüssigkristall-Anzeigeeinheit als Schatten erzeugten Anzeige gegenüber der stärker beleuchteten Lichtfläche 8 zunimmt. Die Anzeige "Signal kommt" ist damit bei allen auftretenden Lichtverhältnissen gut sichtbar.

## Ansprüche

1. Leuchtanzeigeeinrichtung, insbesondere an einer Anforderungsampel mit einem Sichtfenster, durch das eine Anzeige sichtbar ist, wenn diese von einer Lichtquelle beleuchtet ist, dadurch gekennzeichnet, daß die Anzeige eine transflektive Flüssigkeitskristallanzeigeinheit (7) ist, an deren von dem Sichtfenster (6) abgewandten Rückseite als Lichtquelle eine Leuchtdiodenanordnung (12) vorgesehen ist, die in einen Reflektor (11) eingebettet ist.

2. Leuchtanzeigeeinrichtung nach Anspruch 1, dadurch gekennzeichnet, daß die Leuchtdiodenanordnung (12) aus einer Reihe von Leuchtdioden besteht, deren Mittelpunkte auf der mittigen Längsachse des Reflektors (11) liegen.

3. Leuchtanzeigeeinrichtung nach Anspruch 1 oder 2, dadurch gekennzeichnet, daß der Reflektor (11) die Form eines langgestreckten offenen Kastens mit schräg verlaufenden, lichtreflektierenden Innenwänden (13) hat.

4. Leuchtanzeigeeinrichtung nach einem der Ansprüche 1 bis 3, dadurch gekennzeichnet, daß die Kopfenden der Leuchtelektroden eine Einbuchtung zum allseitigen flächigen Zerstreuen des ausgesandten Lichtes aufweisen.

5. Leuchtanzeigeeinrichtung nach einem der Ansprüche 1 bis 4, dadurch gekennzeichnet, daß die transflektive Flüssigkristall-Anzeigeeinrichtung (7) etwa 60 % des Lichts passieren läßt.

6. Leuchtanzeigeeinrichtung nach einem der Ansprüche 1 bis 5, dadurch gekennzeichnet, daß die Flüssigkristall-Anzeigeeinheit (7) mit sinusförmigem Wechselstrom angesteuert wird.

**FIG. 1**

SIGNAL KOMMT

BITTE BERÜHREN

**FIG. 2**

SIGNAL KOMMT

## FIG. 3 a

## FIG. 3 b

## FIG. 3c